# EUROPEAN PATENT APPLICATION

(11) **EP 4 644 842 A1**
(43) Date of publication of application: **05.11.2025**
(21) Application number: 25169009.5
(22) Date of filing: 08.04.2025
(51) Int. Cl.: G01D 5/26, G08C 23/06, H04B 10/291, H04B 10/80

(54) **OPTICALLY POWERED FIBER-OPTIC SENSORS**

(30) Priority: 30.04.2024 US 202418651477
(71) Applicant: Nokia Solutions and Networks Oy, 02610 Espoo (FI)
(72) Inventor: IANNONE, Patrick, Aberdeen, NJ (US); MAZUR, Mikael, Summit, NJ (US); NAGEL, Jonathan, Cable, WI (US)
(74) Representative: Nokia EPO representatives

(57) **Abstract**

Injected light, such as pump light, provides power to each of one or more sensor modules (155) in an optical fiber span (110) extending between communication nodes (100, 105). Each sensor module extracts some of the injected light. Part of the extracted light is used for power. Part of the extracted light is modulated (185) with a sensor output signal and reinjected into the fiber span.

## Description

### TECHNICAL FIELD

The disclosure relates to fiber-optic sensors and sensing methods.

### ART BACKGROUND

Fiber-optic sensors have many uses, including the detection of seismic disturbances and the like, which can degrade communication signals transmitted on optical fiber cables. A fiber-optic sensor that uses optical fiber as the sensing element is referred to as an "intrinsic" sensor. A fiber-optic sensor that uses the optical fiber as a means of relaying signals from a remotely situated, discrete sensor to the electronics that process the signals is referred to as an "extrinsic" sensor.

The use of intrinsic sensing has grown in recent years. It has benefitted from the transitioning of commercial fiber-optic systems from direct detection to coherent systems. The fiber spans of coherent optical communication links can potentially serve as distributed acoustic sensors (DAS), not least, because modern coherent transceivers can collect real-time data on polarization dynamics, among other signal parameters. Displacements of the optical fiber cable due, e.g., to nearby construction activity or to earthquakes, cause temporal perturbations in the state of polarization of data-bearing optical signals. Hence, polarization data collected by the coherent receiver can be used to analyze environmental perturbations along the fiber span.

However, DAS systems of the kind described above are generally viewed as less sensitive than conventional seismometers used as extrinsic fiber sensors. It is therefore desirable to realize high-sensitivity environmental sensors by combining the sensitivity of conventional seismometers with the ability of an optical fiber link to transmit data over long distances without the need for a repeater. To keep costs relatively low, it is also desirable to avoid the significant added expense of running conducting powering cables in parallel with the fiber-optic cable and to keep the sensor module as simple, and therefore low-cost, as possible.

### SUMMARY OF THE DISCLOSURE

We have found a new approach, in which seismometers or other extrinsic sensors can be networked over fiber-optic communication links without the need to power them from metallic conductors. Instead, optical power is delivered to the extrinsic sensors in a manner that is relatively simple and that, in embodiments, leverages existing infrastructure. As a consequence, it may be possible to benefit from the higher sensitivity of extrinsic detectors at reduced cost and complexity.

For example, some embodiments may be implemented in a distributed, Raman-amplified DWDM system. In those embodiments, residual Raman pump light may be used to power one or more sensors. Cost savings are achieved, not least, because a high-power Raman pump is already required to amplify data-bearing signals in the DWDM system. The use of residual pump light to power the sensors reduces the Raman gain experienced by the data-bearing signals by only a small amount.

Furthermore, the electrical signals generated by the extrinsic sensor can drive a modulator that places the real-time analog seismic data directly onto a second portion of the residual Raman pump light. The modulated residual Raman pump light is added back onto the optical fiber. The pump light accordingly serves as the optical carrier in a transmission link from the sensor module to a powered network node. By using the pump light as the optical carrier for the sensor signal, we obviate the need for a laser light source within the sensor module.

At the network node, the Raman pump wavelength can be separated from the digital signal-bearing optical channel or channels by a conventional wavelength diplexer, and the analog seismic data can be recovered with, e.g., a low-cost, low-speed optical-to-electrical converter.

A significant feature of our approach is that for the purpose of carrying the sensor signal, the light in the one or more Raman pump bands can be dropped from the fiber span and added to it using solely passive optical elements. Furthermore, a sensor module itself could, in embodiments, be operated with no electrical powering other than the electric power harvested from the pump light. As a consequence, operation could be possible in an unpowered network.

Accordingly, in a first aspect, the disclosure relates to a system. The system comprises an optical fiber span that extends between a first communication node and a second communication node, and further comprises one or more first sensor modules. Each of the sensor modules is situated along the optical fiber span at a respective intermediate position between the first and second communication nodes.

The first communication node comprises an optical source module configured to inject light of one or more first operational wavelength channels into a first optical fiber of the optical fiber span. Each of the one or more first sensor modules comprises a respective set of one or more first sensors.

Each of the one or more first sensor modules is configured to extract light from the first optical fiber in one or more of the first operational wavelength channels, to convert a portion of the extracted light to electric power for operating its respective set of one or more first sensors, to modulate a portion of the extracted light with one or more output signals from its respective set of one or more first sensors, and to reinject the modulated portion into the first optical fiber for transmission to one or both of the first and second communication nodes.

In embodiments, a plurality of first sensor modules is situated along the optical fiber span at respective intermediate positions between the first and second communication nodes. The optical source module of the first communication node is configured to inject light of a plurality of first operational wavelength channels into the first optical fiber of the optical fiber span.

Each of the plurality of first sensor modules is configured to extract light from the first optical fiber in a respective set of one or more of the first operational wavelength channels, to convert a portion of the extracted light to electric power for operating its respective set of one or more first sensors, to modulate a portion of the extracted light with an output signal from each sensor of its respective set of one or more respective first sensors, and to reinject the modulated portion into the first optical fiber for transmission to one or both of the first and second communication nodes.

In embodiments, there are two first sensor modules situated along the optical fiber span at respective intermediate positions between the first and second communication nodes. Each of the respective intermediate positions is nearer to one of the first and second communication nodes, and farther from the other. Each of the two first sensor modules comprises a respective set of one or more first sensors. The second communication node comprises an optical source module configured to inject light of one or more first operational wavelength channels into the first optical fiber of the optical fiber span. The optical source modules of the first and second communication nodes are respectively configured to inject light of one or more first operational wavelength channels into the first optical fiber of the optical fiber span. Each of the two first sensor modules is configured to extract light in one or more of the first operational wavelength channels that is received from its respective farther communication node, to convert a portion of the extracted light to electric power for operating its respective set of one or more first sensors, to modulate a portion of the extracted light with an output signal from each sensor of its respective set of one or more respective first sensors, and to reinject the modulated portion into the first optical fiber for transmission to one or both of the first and second communication nodes.

In embodiments, the optical fiber communication system is a Raman amplified system, and at least one first operational optical channel is a pump channel for Raman amplification of communication signals in the first optical fiber.

In embodiments, the second communication node comprises an optical source module configured to inject light of at least one first operational wavelength channel into the first optical fiber, and at least one of the first sensor modules is configured to extract, from the first optical fiber, light of at least one first operational wavelength channel transmitted from both the first and the second communication nodes, and to convert a portion of the extracted light from both said nodes to electric power for operating at least one first sensor.

In embodiments, the second communication node is configured to transmit communication signals toward the first communication node on the first optical fiber of the optical fiber span, and the one or more operational wavelength channels are optical wavelength channels for Raman amplification of the communication signals.

In embodiments, the first communication node is configured to transmit communication signals toward the second communication node on the first optical fiber of the optical fiber span, and the one or more operational wavelength channels are optical wavelength channels for Raman amplification of the communication signals.

In embodiments, the system further comprises one or more second sensor modules situated along the optical fiber span at respective intermediate positions between the first and second communication nodes. The second communication node comprises an optical source module configured to inject light of one or more second operational wavelength channels into a second optical fiber of the optical fiber span. Each of the one or more second sensor modules comprises a respective set of one or more second sensors.

Each of the one or more second sensor modules is configured to extract light of at least one second operational wavelength channel from the second optical fiber, to convert a portion of the extracted light to electric power for operating its respective set of one or more second sensors, to modulate a portion of the extracted light with at least one output signal from its respective set of one or more second sensors, and to reinject the modulated portion into the second optical fiber for transmission to one or both of the first and second communication nodes.

In further embodiments, the second communication node is configured to transmit communication signals toward the first communication node on the first optical fiber of the optical fiber span. The first communication node is configured to transmit communication signals toward the second communication node on the second optical fiber of the optical fiber span. At least one of the first operational wavelength channels and at least one of the second operational wavelength channels is an optical wavelength channel for Raman amplification of the communication signals.

In embodiments, each of the one or more first sensor modules comprises a downlink passive optical coupling element configured to extract light from the first optical fiber in at least one of the one or more first operational wavelength channels, a photodetector configured to convert a portion of the extracted light to electric power for operating the respective set of one or more first sensors, an optical modulator configured to modulate a portion of the extracted light with at least one output signal from the respective set of one or more first sensors, and an uplink passive optical coupling element configured to reinject the modulated portion into the first optical fiber for transmission to one or both of the first and second communication nodes.

In a second aspect, the disclosure relates to a method. The method comprises injecting light from an optical source module in a first communication node of an optical fiber network in which an optical fiber span extends between the first communication node and a second communication node of said network. The injected light belongs to one or more first operational wavelength channels, and it is injected into a first optical fiber of the optical fiber span.

The method further comprises, at a first sensor module situated along the optical fiber span at an intermediate position between the first and second communication nodes, extracting light from the first optical fiber in at least one of the first operational wavelength channels, converting a portion of the extracted light to electric power for operating a first sensor, modulating a portion of the extracted light with an output signal from the first sensor, and reinjecting the modulated portion into the first optical fiber for transmission to one or both of the first and second communication nodes. claim 11

In embodiments, a plurality of first sensor modules are situated along the optical fiber span at respective intermediate positions between the first and second communication nodes. The injecting of light comprises injecting light belonging to a plurality of the first operational wavelength channels into the first optical fiber of the optical fiber span, and the extracting of light comprises, in each of the plurality of first sensor modules, extracting light from the first optical fiber in a respective one of the first operational wavelength channels. At each of the plurality of first sensor modules, extracted light is converted to electric power for operating a respective one of a plurality of first sensors, a portion of the extracted light is modulated with an output signal from the respective first sensor, and the modulated portion is reinjected into the first optical fiber for transmission to one or both of the first and second communication nodes. claim 12

In embodiments, at least one of the first operational wavelength channels is a pump channel for Raman amplification of communication signals in the first optical fiber. claim 13

In embodiments, the method further comprises: From the second communication node, injecting light belonging to at least one of the first operational wavelength channels into the first optical fiber; and at the first sensor module, extracting, from the first optical fiber, light belonging to at least one of the first operational wavelength channels that is transmitted from both the first and the second communication nodes, and converting a portion of the extracted light from both said nodes to electric power for operating the first sensor. claim 14

In embodiments, the one or more first operational wavelength channels are optical wavelength channels for Raman amplification of communication signals transmitted from the second communication node toward the first communication node on the first optical fiber of the optical fiber span. claim 15

In embodiments, the one or more first operational wavelength channels are optical wavelength channels for Raman amplification of communication signals transmitted from the first communication node toward the second communication node on the first optical fiber of the optical fiber span. claim 16

In embodiments, two first sensor modules are situated along the optical fiber span at respective intermediate positions between the first and second communication nodes, each of the respective intermediate positions being nearer to one of the communication nodes and farther from the other of the communication nodes. Light belonging to one or more first operational wavelength channels is injected into the first optical fiber of the optical fiber span from an optical source module in the second communication node. At each of the two first sensor modules, light in at least one of the first operational wavelength channels that is incident from the respectively farther communication node is extracted from the first optical fiber. At each of the two sensor modules, the method comprises converting a portion of the extracted light to electric power for operating a respective first sensor, modulating a portion of the extracted light with an output signal from the respective first sensor, and reinjecting the modulated portion into the first optical fiber for transmission to one or both of the first and second communication nodes. claim 17

In embodiments, the method further comprises: From an optical source module in the second communication node, injecting light belonging to one or more second operational wavelength channels into a second optical fiber of the optical fiber span; and at a second sensor module situated along the optical fiber span at an intermediate position between the first and second communication nodes, extracting light from the second optical fiber in at least one of the second operational wavelength channels, converting a portion of the extracted light to electric power for operating a second sensor, modulating a portion of the extracted light with an output signal from the second sensor, and reinjecting the modulated portion into the second optical fiber for transmission to one or both of the first and second communication nodes. claim 18

In further embodiments, the one or more first operational wavelength channels and the one or more second operational wavelength channels each comprise optical wavelength channels for Raman amplification of communication signals transmitted on the optical fiber span between the first communication node and the second communication node. claim 19

### BRIEF DESCRIPTION OF THE DRAWINGS

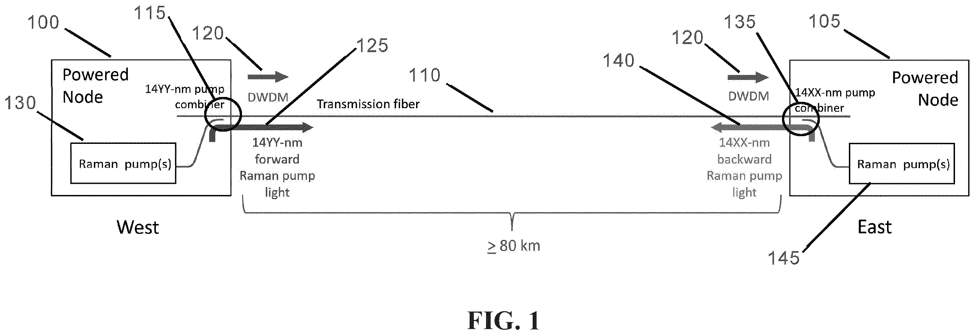

FIG. 1 is a schematic representation of a fiber link in a conventional Raman-amplified DWDM system. The direction of traffic signals in the link is left-to-right in the drawing view. For convenience, but without loss of generality, we refer to this direction as "eastbound". Such conventional Raman-amplified DWDM systems typically use pairs of optical fibers to connect nodes, with one fiber for the eastbound direction, and the other for the opposite direction, referred to here as "westbound".

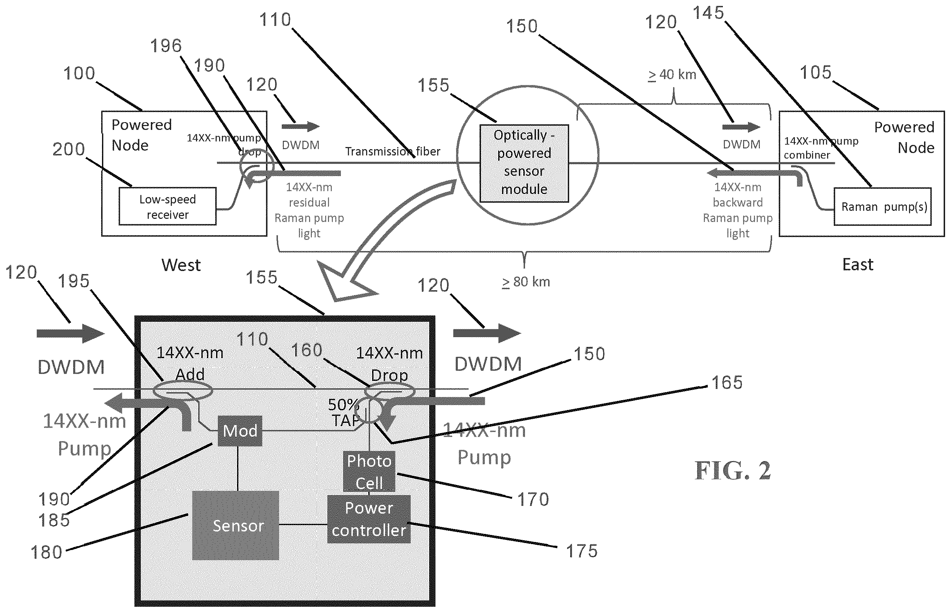

FIG. 2 is a schematic representation of a system incorporating principles described here, in an example embodiment. The figure shows a DWDM fiber-optic communication system in which backward Raman pumping provides Raman gain to data-bearing DWDM channels, and also powers a sensor module and provides an optical carrier for analog sensor-to-node communication.

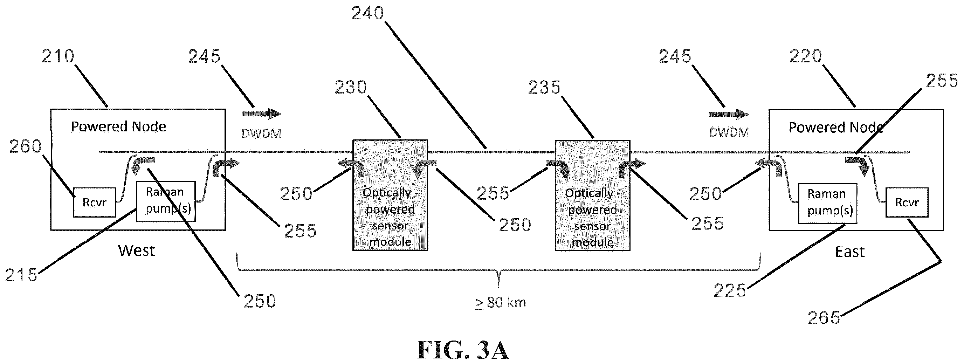

FIG. 3A is a schematic representation of a system incorporating principles described here, in another example embodiment. In the example of FIG. 3A, forward and backward Raman pumps provide gain for respective, optically powered sensors situated along the same fiber. The respective wavelengths used for forward and backward pumping are distinct. The respective wavelengths may be separable using, e.g., conventional passive optics. The Raman-amplified fiber span of FIG. 3A supports two sensor modules, each of which is distant by more than half the span length from the pump laser providing it with power. In this case, the forward and backward pump wavelengths must be distinct, so that each can be selected by the wavelength drop included in the corresponding sensor.

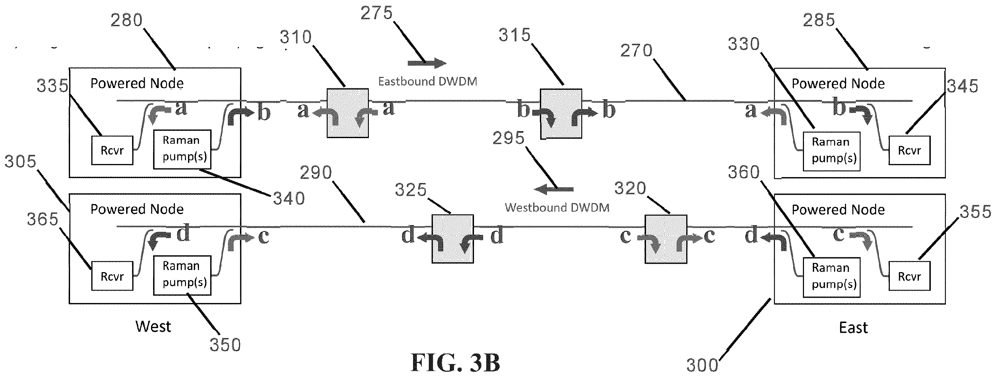

FIG. 3B is a schematic representation of a system incorporating principles described here, in still another example embodiment. In the example of FIG. 3B, forward and backward Raman pumps provide gain for respective, optically powered sensors situated along the same fiber. The respective wavelengths used for forward and backward pumping are distinct. The respective wavelengths may be separable using, e.g., conventional passive optics. The Raman-amplified fiber span of FIG. 3B also includes sensors on both the eastbound fiber span and the westbound fiber span. Relative to the embodiment of FIG. 3A, this use of both fiber spans doubles the total number of sensors deployed along the fiber cable and, as seen in the figure, can also further reduce the spacing between sensors.

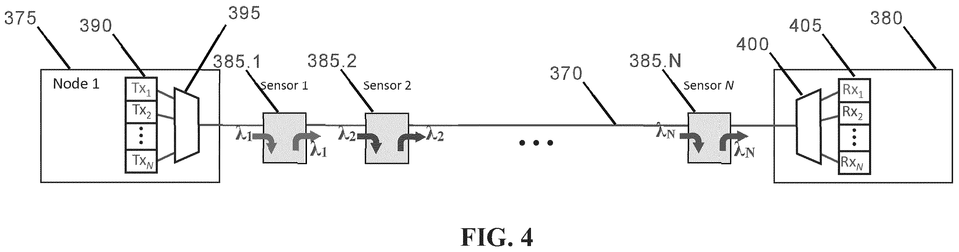

FIG. 4 is a schematic representation of a still further embodiment, in which a fiber sensor system is dedicated to extrinsic fiber sensing, and does not have a parallel function as a working fiber-optic communication system. Such a dedicated system may offer superior sensor performance, but it may also be more costly, because capital and operational costs associated with the fiber span and with the high-power lasers located at the nodes are duplicated, rather than being shared between the DWDM fiber-optic communication system and the extrinsic fiber sensor system. In the example of FIG. 4, a plurality of laser wavelengths generated at node 1 are used to power a plurality of sensor modules placed along the fiber span, while simultaneously serving as optical carriers for the sensor-to-node transmission of sensor data.

### DETAILED DESCRIPTION

We have developed a system and method for extrinsic fiber sensing, in which the sensor module power is provided by laser light emitted by a remote laser. Our approach makes it possible to place sensors along the fiber span without the need for a powered cable. Furthermore, the same light that powers the module may also serve as the carrier for transmitting the sensor signal back to a network node.

FIG. 1 is a schematic illustration of an eastbound fiber link in a conventional Raman-amplified fiber-optic dense wavelength-division multiplexed (DWDM) transmission system. As explained above, we have adopted the term "eastbound" to mean, arbitrarily and without loss of generality, a transmission direction for network traffic that is shown in the accompanying figures as running from the left to the right side of the page. Raman-amplified DWDM systems of the kind illustrated in FIG. 1 are well known to those skilled in the art. Such systems typically use pairs of optical fibers to connect nodes, with one fiber for each of the respective eastbound and westbound directions. Accordingly, FIG. 1 shows a western node 100 and an eastern node 105, connected by eastbound transmission fiber 110.

Turning to FIG. 1, it will be seen that within the western node, a Raman pump combiner 115 combines one or more eastbound DWDM data-bearing optical carriers 120 onto fiber 110 together with Raman-pump light 125 emitted by one or more Raman pump lasers 130.

As the high-power Raman pump light 125 and the data-bearing signals 120 propagate along the transmission fiber 110, power is transferred from the pump light to the data-bearing signals, thereby amplifying the signals in a process known as forward-pumped distributed Raman amplification. For C-band DWDM wavelengths, for example, the peak Raman gain occurs at a detuning of approximately 100 nm to the long-wavelength side of the Raman pump wavelength. Therefore, a single Raman pump wavelength of 1450 nm would produce a gain peak at approximately 1550 nm.

In a typical Raman-amplified DWDM system, fiber spans have lengths of 80 km or more. For such fiber spans, most of the forward Raman gain occurs in the first half of the span, with relatively small gain occurring in the second half of the span. That is why we believe it is feasible to divert the pump light at or beyond mid-span for use as a power source, without incurring a prohibitive penalty in Raman gain. By way of illustration, we have estimated that in model systems, the gain penalty for diverting pump light at a point two-thirds of the span length from the pump laser(s) (specifically, after 53.3 km along an 80-km span) would be approximately 0.6 dB out of a total Raman gain of greater than 16 dB.

Turning again to FIG. 1, it is shown there that at the end of the eastbound transmission fiber 110, the DWDM signals 120 enter the eastern node 105, where a second Raman-pump combiner 135 directs backward propagating Raman pump light 140 in the westward direction along the transmission fiber 110. Similarly to the forward Raman amplification described above, the high-power backward-propagating (westbound) Raman pump light 140 from one or more Raman pump lasers 145 provides gain to the eastbound data-bearing signals 120. For typical fiber spans with lengths of 80 km or more, most of the backward Raman gain occurs in the second half of the span, with relatively small gain occurring in the first half of the span. Thus, again, there is a relatively small penalty for diverting the (now backward-propagating) pump light for use as a power source at approximately mid-span.

Conventional Raman-amplified DWDM systems as illustrated, e.g., in FIG. 1, may be implemented with both forward and backward Raman pumping, or with only forward pumping, or with only backward pumping. Each of these cases may be compatible with the approach described here, in which pump light is diverted to provide a power source for a sensor.

Conventional Raman-amplified DWDM systems as illustrated, e.g., in FIG. 1, may be implemented with more than one Raman pump wavelength. Thus, for example, a Raman pump source 130 at the western node, and/or a Raman pump source 145 at the eastern node, may comprise a battery of pump lasers, each emitting at a respective Raman pump wavelength. As those skilled in the art will recognize, the combining of plural pump wavelengths is a known technique for flattening the net Raman gain over a relatively broad wavelength band. The approach described here, in which pump light is diverted to provide a power source for a sensor, may be used in systems that employ plural Raman pump wavelengths for forward or backward pumping, or for both forward and backward pumping.

Moreover, individual pump wavelengths, singly or in combination, may be selected for diversion for use as a sensing power source. In some embodiments, a higher-power pump wavelength, for example, could be used as a power source, while using one or more lower-power pump wavelengths as carriers of signal. In some embodiments, two or more different pump wavelengths could be used to provide power and to provide carriers for two or more respective sensors. For example, it could be useful for vibrational or seismic sensing to provide, within the same sensor module, a set of three distinct sensors respectively oriented along three mutually perpendicular axes. A respective one of three pump wavelengths (or one of three distinct sets of pump wavelengths) could be provided for each of the three sensors.

FIG. 2 is a schematic drawing of a system according to our new approach, in an example embodiment. The new features that are to be described below are implemented in a Raman-amplified DWDM system similar to the system of FIG. 1. Elements of FIG. 2 and subsequent figures that correspond to elements that also appear in FIG. 1 are called out with like reference numerals.

Turning to FIG. 2, it will be seen that as in FIG. 1, a fiber-optic communication link is implemented using a transmission fiber 110 to connect western node 100 to eastern node 105. For simplicity of presentation only, FIG. 2 omits forward Raman pumping and shows only backward-pumped distributed Raman amplification. That is, Raman pump source 145 is shown transmitting westbound pump light 150 on fiber 110, which propagates backward relative to the eastbound DWDM light 120. The omission of forward Raman pumping from the figure is for clarity only, and should not be understood as limiting.

In distinction to FIG. 1, the system of FIG. 2 includes a remote sensor module 155. Module 155 could usefully be located, for example, at or before the midpoint of the fiber span, as measured from the west node. Some or all of the residual pump light, i.e., the portion of pump light 150 that reaches module 155 after attenuation in fiber 110, is tapped off by module 155 for use in powering module 155 and for use as an optical carrier for sensor data transfer from the module to the western node.

It should be noted that in practical implementations, the specific placement of the sensor module 155 will depend, among other things, on the overall loss budget in the optical span, and on how much of a gain penalty can be tolerated.

The center of the span may often be an advantageous location for the sensor module, but wide variation may be possible if permitted by the system parameters listed above, among others. According to our estimates discussed above, which were based on an 80-km span, for example, it could be advantageous in some systems to place a sensor module at a point two-thirds the span length from the pump or pumps. Thus, in a span comprising a fiber pair, i.e., one eastbound fiber and one westbound fiber, and having only one sensor per fiber, it could be advantageous to place the two sensors at points respectively one-third and two-thirds the span length from a given end of the span.

An example embodiment of a sensor module 155 is shown in the inset of FIG. 2. As shown there, the sensor module includes a passive wavelength drop 160 on the side from which the residual portion of Raman pump light 150 arrives (the eastern side in this example). Wavelength drop 160 directs the residual pump light to broadband fiber coupler 165, which has a nominal coupling ratio of, e.g., 50%. It should be noted, however, that this example is nonlimiting. In specific practical applications, any of a range of values for the coupling ratio may be selected to optimize performance. It should also be noted that in a system that uses multiple Raman pump wavelengths, wavelength drop 160 may be implemented as a wavelength-selective element that directs only one or more selected wavelengths of pump light to coupler 165, while permitting other wavelengths of pump light to pass through.

One of two outputs of coupler 165 is directed to a high-efficiency photodetector 170. The electrical output of photodetector 170 is conditioned by a power controller circuit 175. The conditioned electrical output powers sensor 180, which in illustrative examples is a seismometer.

As shown in the drawing, the conditioned electrical output may also power an optical modulator driver circuit 185, if necessary. That is, the analog electrical signal generated directly by the sensor may in some embodiments be itself sufficient to drive the modulator. In other embodiments, however, a driver circuit may be needed, exemplarily for an operation or combination of operations such as amplification, filtering, and equalization.

A second of the two outputs of coupler 165 is directed to a polarization-independent low-speed optical modulator 185 that is driven with an analog output signal from sensor 180. Modulator 185 modulates the pump light directed to it from coupler 165 with sensor data to produce modulated optical output 190.

Modulated optical output 190 is coupled back onto transmission fiber 110 by passive wavelength add 195. As best seen in the main view of FIG. 2, modulated optical output 190 traverses the western half of the fiber span and is dropped at the western node 100 by a passive wavelength drop 196, from which it is directed onto a low-speed receiver 200 that recovers the sensor data.

It is noteworthy in this regard that in general, it is preferable to use a transmissive modulator rather than a reflective modulator, so that the modulated pump light is not directed back toward the Raman pump laser from which it was launched. Although a reflective modulator, for example, could modulate the sensor output in the forward direction, there is a danger that the received sensor signal could be obscured by pump light that has simply been backscattered (by Rayleigh scattering and/or discrete reflections) in the forward direction. The use of a reflective modulator to direct modulated backward pumped light in the forward direction should not, however, be regarded as excluded from the scope of the present disclosure.

Based on our estimates, we believe that ample power can be obtained from the residual pump light for powering a sensor module such as module 155 of FIG. 2. For example, if 500 mW (27 dBm) of optical pump power at 1486-nm wavelength is injected at the end of an 80-km fiber span of OFS Allwave Fibre (loss at 1486 nm measured to be 0.222 dB/km), the residual power at mid-span (40 km) in typical examples would be about 64 mW (18.1 dBm). Neglecting the relatively small penalty due to coupling losses, and assuming a 50% tap ratio at, e.g., tap 165 in FIG. 2, approximately 32 mW of pump light would be incident on the photocell 170, generating approximately 29 mA of photocurrent. (This estimate assumes a responsivity of about 0.90 A/W at 1486 nm for a photodiode such as the AGX Technologies PPDA photodiode.) This current level has been shown in our studies to be more than sufficient to power a module including a commercially available battery charging chip and supercapacitor, a low-power acoustic sensor based on a piezoelectric accelerometer and having a low power consumption of 180 □W, and a MEMS-based variable optical attenuator such as those produced by OZ Optics or Santec, having a maximum power consumption of 100 □W. Such a MEMS-based variable optical attenuator is well suited to serve as a polarization-independent modulator at acoustic frequencies.

It should be noted in this regard that the charging chip and supercapacitor in combination can serve as the power controller 175 of FIG. 2. An example battery charging chip used in our studies is the TI model bq25505. An example piezoelectric accelerometer used in our studies is the model LVEP100 from Wilcoxon Sensing Technologies which, as noted, has a maximum power consumption of 180 □W.

In the example of FIG. 2, analog data output from sensor 180 can be used to directly drive the modulator in real time. The data can be transmitted in analog form to western node 100. Thus, the system of FIG. 2 could be operated without any need for digital communication between the sensor module and the node or nodes with which it communicates.

However, there may also be applications in which digital communication between the sensor module and one or both nodes is desirable. For that purpose, a microcontroller for converting the analog sensor output to digital data would be included in the sensor module 155 in the signal path between sensor 180 and modulator 185.

Including a microcontroller would add complexity, but it would add more control over the operation of the sensor module. For example, it could make it possible for the sensor module to enter a low-power mode during which it collects and stores sensor data, but does not transmit. At specified times, or when triggered by an environmental event, the sensor data could then be transmitted digitally from the sensor module to a node. In such a low-power mode, the transmissions would thus be intermittent.

The microcontroller would have additional power requirements. These power requirements could be met, for example, by making only intermittent transmissions. Energy would be stored in a supercapacitor or in a battery during the quiescent periods between transmissions, and used only when needed. As little as 0.1 mW of electric power, or even somewhat less, is believed sufficient to charge a suitable energy storage device for that purpose.

Stored energy could also be used for the intermittent transmission of analog sensor data. This would relax the requirements for output electric power from the photodetector, but would limit the acquisition of real-time data to discrete time windows. In a possible embodiment, there is a quiescent mode in which the microcontroller powers up the sensor for a fraction of each of a repeated succession of timeslots. For example, the sensor may be powered for duration □ of 0.1 s within a timeslot whose duration T is 2 s. If, while powered, the sensor detects vibrations of a magnitude above a first predetermined threshold, the sensor and modulator remain powered up until the magnitude of the vibrations fall below a second predetermined threshold for a predetermined period of time.

FIG. 3A is a schematic representation of a system in which western node 210 includes a forward Raman pump 215, and eastern node 220 includes a backward Raman pump 225. The use of both forward and backward pumping can make more pump light available for powering sensors than would be available when there is only one pump direction. This can facilitate the use of more than one sensor situated on the same fiber.

Thus, FIG. 3A shows two sensor modules 230 and 235, both situated along transmission fiber 240, which carries DWDM transmission 245 in the west-to-east direction. Backward Raman pump 225 provides pump light 250, a portion of which is used for powering sensor module 230. Forward Raman pump 215 provides pump light 255, a portion of which is used for powering sensor module 235. It will be seen that each of the two sensor modules is distant by more than half the span length from the pump source from which it draws power.

The pump wavelength or wavelengths used to power sensor module 230 are distinct from the pump wavelength or wavelengths used to power sensor module 235. At each of the two sensor modules, the respective wavelength or wavelengths for powering that module may be separated using, e.g., a wavelength drop module or other passive optical element of any of various kinds known in the art.

At sensor module 230, a portion of pump light 250 is modulated with sensor output data and added back onto fiber 240 for transmission to Node 210. At Node 210, the pump light 250 is dropped from fiber 240 and directed to receiver 260 for reception and subsequent processing. At sensor module 235, s portion of pump light 255 is modulated with sensor output data and added back onto fiber 240 for transmission to Node 220. At Node 220, the pump light 255 is dropped from fiber 240 and directed to receiver 265 for reception and subsequent processing.

FIG. 3B is a schematic representation of a system in which sensors are located along both an eastbound fiber span 270 carrying DWDM transmissions 275 from a western node 280 to an eastern node 285, and a westbound fiber span 290 carrying DWDM transmissions 295 from an eastern node 300 to a western node 305. In the example illustrated in FIG. 3B, two sensor modules 310, 315 are situated along fiber 270, and two sensor modules 320, 325 are situated along fiber 290. Thus, the total number of sensors along the fiber cable is doubled, relative to the arrangement of FIG. 3A. Importantly, the positions of the sensor modules along one fiber can be staggered relative to the positions of the sensor modules along the other fiber, as shown in FIG. 3B. Such an arrangement has the benefit of reducing the sequential distance between sensors along the cable.

With further reference to FIG. 3B, it will be seen that on the eastbound fiber span 270, the Raman pump light labeled a in the figure is transmitted from backward pump source 330 at Node 285. At sensor module 310, the residual portion of pump light a is used to provide sensor power and to carry sensor output data to receiver 335 at Node 280. Also on eastbound fiber span 270, the Raman pump light labeled b in the figure is transmitted from forward pump source 340 at Node 280. At sensor module 315, the residual portion of pump light b is used to provide sensor power and to carry sensor output data to receiver 345 at Node 285.

Similarly, on the westbound fiber span 290, the Raman pump light labeled c in the figure is transmitted from backward pump source 350 at Node 305. At sensor module 320, the residual portion of pump light c is used to provide sensor power and to carry sensor output data to receiver 355 at Node 300. Also on westbound fiber span 290, the Raman pump light labeled d in the figure is transmitted from forward pump source 360 at Node 300. At sensor module 325, the residual portion of pump light d is used to provide sensor power and to carry sensor output data to receiver 365 at Node 305.

It is noteworthy in regard to various embodiments that if multiple Raman pump wavelengths are used for forward pumping, for backward pumping, or for both forward and backward pumping, each of the several distinct pump wavelengths can be used to address a respective one of multiple sensor modules situated along the same fiber. As explained above, passive, wavelength-selective optical elements can be used to drop selected wavelengths from the fiber for input into the respective sensor modules, and to add the selected wavelengths back onto the fiber at the output ends of the respective sensor modules. Multiple Raman pumps are often used in Raman-amplified systems to tailor the shape of the Raman gain as a function of wavelength.

FIG. 4 is a simplified, schematic representation of an alternate embodiment in which a fiber sensor system is dedicated to extrinsic fiber sensing, but does not carry network traffic; that is, it does not serve concurrently as a working fiber-optic communication system. Such a dedicated system may offer superior sensor performance, but it may also be more costly, because capital and operational costs associated with the fiber span and with the high-power lasers located at the nodes are duplicated, rather than being shared between the DWDM fiber-optic communication system and the extrinsic fiber sensor system.

Turning to FIG. 4, there will be seen a transmission fiber 370 in a fiber span between western node 375 and eastern node 380. A multiplicity of N sensor modules are situated along fiber 370, of which representative modules 385.1, 385.2, and 385.N are shown in the figure.

For clarity, FIG. 4 shows transmission of laser light only in the eastbound direction. As explained below, a multiplicity of N wavelengths are transmitted, corresponding to respective ones of the sensor modules 385.1-385.N. The transmitted laser light is used to power sensor modules and to serve as a carrier for the sensor-to-node transmission of sensor data, as described above in reference to the preceding figures. However, the transmitted laser light is not used as pump light for Raman amplification. Hence, we will refer to the wavelengths of the transmitted laser light in the following discussion as "laser wavelengths", but not as "pump wavelengths".

Turning again to FIG. 4, it will be seen that at Node 1, i.e., at the western node 375, a laser source 390 generates light at a plurality of N laser wavelengths λ1, λ2, ..., λN, which are transmitted into fiber 370. Laser source 390 is shown in FIG. 4 as a battery of individual laser transmitters Tx1, Tx2, ..., TxN, each emitting at a respective one of the N laser wavelengths.

At Node 1, the outputs of each of the N laser transmitters Tx1-TxN are multiplexed onto fiber 370 by WDM multiplexer 395. At each of sensor modules 385.1-385.N, a passive wavelength drop, not shown in the figure, is matched to a respective one of the laser wavelengths. Thus, each distinct laser wavelength powers the sensor module having a drop matched to that wavelength.

Each sensor module may contain a polarization-independent modulator, not shown in the figure, that modulates a portion of the light at the locally dropped wavelength. The light is modulated with sensor data, which is then added back onto the fiber span, as explained above in reference to the preceding figures. The light at laser wavelengths that has been modulated with sensor data is demultiplexed by WDM demultiplexer 400 at Node 2, i.e., at eastern node 380. Each of the demultiplexed laser wavelengths is directed as input to receiver 405. Receiver 405 is shown in the figure as comprising a plurality of receiver channels Rx1, Rx2, ..., RxN. Each receiver channel outputs, in electrical form, the sensor data from a respective one of the N sensor modules.
Embodiment 11. A method, comprising:
   from an optical source module in a first communication node of an optical fiber network in which an optical fiber span extends between the first communication node and a second communication node of said network, injecting light belonging to one or more first operational wavelength channels into a first optical fiber of the optical fiber span; and
   at a first sensor module situated along the optical fiber span at an intermediate position between the first and second communication nodes:
      extracting light from the first optical fiber in at least one of the first operational wavelength channels;
      converting a portion of the extracted light to electric power for operating a first sensor;
      modulating a portion of the extracted light with an output signal from the first sensor; and
      reinjecting the modulated portion into the first optical fiber for transmission to one or both of the first and second communication nodes.
Embodiment 16. The method of embodiment 11, wherein the one or more first operational wavelength channels are optical wavelength channels for Raman amplification of communication signals transmitted from the first communication node toward the second communication node on the first optical fiber of the optical fiber span.
Embodiment 17. The method of embodiment 11, wherein:
   two first sensor modules are situated along the optical fiber span at respective intermediate positions between the first and second communication nodes, each of the respective intermediate positions being nearer to one of the communication nodes and farther from the other of the communication nodes;
   the method further comprises injecting light belonging to one or more first operational wavelength channels into the first optical fiber of the optical fiber span from an optical source module in the second communication node;
   at each of the two first sensor modules, light in at least one of the first operational wavelength channels that is incident from the respectively farther communication node is extracted from the first optical fiber; and
   the method comprises, at each of the two sensor modules:
      converting a portion of the extracted light to electric power for operating a respective first sensor;
      modulating a portion of the extracted light with an output signal from the respective first sensor; and
      reinjecting the modulated portion into the first optical fiber for transmission to one or both of the first and second communication nodes.
Embodiment 18. The method of embodiment 11, further comprising:
   from an optical source module in the second communication node, injecting light belonging to one or more second operational wavelength channels into a second optical fiber of the optical fiber span; and
   at a second sensor module situated along the optical fiber span at an intermediate position between the first and second communication nodes:
      extracting light from the second optical fiber in at least one of the second operational wavelength channels;
      converting a portion of the extracted light to electric power for operating a second sensor;
      modulating a portion of the extracted light with an output signal from the second sensor; and
      reinjecting the modulated portion into the second optical fiber for transmission to one or both of the first and second communication nodes.
Embodiment 19. The method of embodiment 18, wherein the one or more first operational wavelength channels and the one or more second operational wavelength channels each comprise optical wavelength channels for Raman amplification of communication signals transmitted on the optical fiber span between the first communication node and the second communication node.

## Claims

1. A system, comprising an optical fiber span that extends between a first communication node and a second communication node, and further comprising one or more first sensor modules, each of which is situated along the optical fiber span at a respective intermediate position between the first and second communication nodes, wherein:
the first communication node comprises an optical source module configured to inject light of one or more first operational wavelength channels into a first optical fiber of the optical fiber span;
each of the one or more first sensor modules comprises a respective set of one or more first sensors;
each of the one or more first sensor modules is configured to extract light from the first optical fiber in one or more of the first operational wavelength channels, to convert a portion of the extracted light to electric power for operating its respective set of one or more first sensors, to modulate a portion of the extracted light with one or more output signals from its respective set of one or more first sensors, and to reinject the modulated portion into the first optical fiber for transmission to one or both of the first and second communication nodes.

2. The system of claim 1, comprising a plurality of first sensor modules situated along the optical fiber span at respective intermediate positions between the first and second communication nodes, each of the first sensor modules comprising a respective set of one or more first sensors, wherein:
the optical source module of the first communication node is configured to inject light of a plurality of first operational wavelength channels into the first optical fiber of the optical fiber span; and
each of the plurality of first sensor modules is configured to extract light from the first optical fiber in a respective set of one or more of the first operational wavelength channels, to convert a portion of the extracted light to electric power for operating its respective set of one or more first sensors, to modulate a portion of the extracted light with an output signal from each sensor of its respective set of one or more respective first sensors, and to reinject the modulated portion into the first optical fiber for transmission to one or both of the first and second communication nodes.

3. The system of claim 1, comprising two first sensor modules situated along the optical fiber span at respective intermediate positions between the first and second communication nodes, each of the respective intermediate positions being nearer to one of the communication nodes and farther from the other of the communication nodes, each of the first sensor modules comprising a respective set of one or more first sensors, wherein:
the second communication node comprises an optical source module configured to inject light of one or more first operational wavelength channels into the first optical fiber of the optical fiber span; and
each of the two first sensor modules is configured to extract light in one or more of the first operational wavelength channels that is received from its respective farther communication node, to convert a portion of the extracted light to electric power for operating its respective set of one or more first sensors, to modulate a portion of the extracted light with an output signal from each sensor of its respective set of one or more respective first sensors, and to reinject the modulated portion into the first optical fiber for transmission to one or both of the first and second communication nodes.

4. The system of claim 1, wherein the optical fiber communication system is a Raman amplified system, and at least one first operational optical channel is a pump channel for Raman amplification of communication signals in the first optical fiber.

5. The system of claim 1, wherein:
the second communication node comprises an optical source module configured to inject light of at least one first operational wavelength channel into the first optical fiber; and
at least one of the first sensor modules is configured to extract, from the first optical fiber, light of at least one first operational wavelength channel transmitted from both the first and the second communication nodes, and to convert a portion of the extracted light from both said nodes to electric power for operating at least one first sensor.

6. The system of claim 1, wherein:
the second communication node is configured to transmit communication signals toward the first communication node on the first optical fiber of the optical fiber span; and
the one or more operational wavelength channels are optical wavelength channels for Raman amplification of the communication signals.

7. The system of claim 1, wherein:
the first communication node is configured to transmit communication signals toward the second communication node on the first optical fiber of the optical fiber span; and
the one or more operational wavelength channels are optical wavelength channels for Raman amplification of the communication signals.

8. The system of claim 1, further comprising one or more second sensor modules situated along the optical fiber span at respective intermediate positions between the first and second communication nodes, wherein:
the second communication node comprises an optical source module configured to inject light of one or more second operational wavelength channels into a second optical fiber of the optical fiber span;
each of the one or more second sensor modules comprises a respective set of one or more second sensors;
each of the one or more second sensor modules is configured to extract light of at least one second operational wavelength channel from the second optical fiber, to convert a portion of the extracted light to electric power for operating its respective set of one or more second sensors,
to modulate a portion of the extracted light with at least one output signal from its respective set of one or more second sensors, and to reinject the modulated portion into the second optical fiber for transmission to one or both of the first and second communication nodes.

9. The system of claim 8, wherein:
the second communication node is configured to transmit communication signals toward the first communication node on the first optical fiber of the optical fiber span;
the first communication node is configured to transmit communication signals toward the second communication node on the second optical fiber of the optical fiber span; and
at least one of the first operational wavelength channels and at least one of the second operational wavelength channels is an optical wavelength channel for Raman amplification of the communication signals.

10. The system of claim 1, wherein each of the one or more first sensor modules comprises:
a downlink passive optical coupling element configured to extract light from the first optical fiber in at least one of the one or more first operational wavelength channels;
a photodetector configured to convert a portion of the extracted light to electric power for operating the respective set of one or more first sensors;
an optical modulator configured to modulate a portion of the extracted light with at least one output signal from the respective set of one or more first sensors; and
an uplink passive optical coupling element configured to reinject the modulated portion into the first optical fiber for transmission to one or both of the first and second communication nodes.

11. A method, comprising:
from an optical source module in a first communication node of an optical fiber network in which an optical fiber span extends between the first communication node and a second communication node of said network, injecting light belonging to one or more first operational wavelength channels into a first optical fiber of the optical fiber span; and
at a first sensor module situated along the optical fiber span at an intermediate position between the first and second communication nodes:
extracting light from the first optical fiber in at least one of the first operational wavelength channels;
converting a portion of the extracted light to electric power for operating a first sensor;
modulating a portion of the extracted light with an output signal from the first sensor; and
reinjecting the modulated portion into the first optical fiber for transmission to one or both of the first and second communication nodes.

12. The method of claim 11, wherein:
a plurality of first sensor modules are situated along the optical fiber span at respective intermediate positions between the first and second communication nodes;
the injecting of light comprises injecting light belonging to a plurality of the first operational wavelength channels into the first optical fiber of the optical fiber span;
the extracting of light comprises, in each of the plurality of first sensor modules, extracting light from the first optical fiber in a respective one of the first operational wavelength channels; and
at each of the plurality of first sensor modules, extracted light is converted to electric power for operating a respective one of a plurality of first sensors, a portion of the extracted light is modulated with an output signal from the respective first sensor, and the modulated portion is reinjected into the first optical fiber for transmission to one or both of the first and second communication nodes.

13. The method of claim 11, wherein at least one of the first operational wavelength channels is a pump channel for Raman amplification of communication signals in the first optical fiber.

14. The method of claim 11, further comprising:
from the second communication node, injecting light belonging to at least one of the first operational wavelength channels into the first optical fiber; and
at the first sensor module, extracting, from the first optical fiber, light belonging to at least one of the first operational wavelength channels that is transmitted from both the first and the second communication nodes, and converting a portion of the extracted light from both said nodes to electric power for operating the first sensor.

15. The method of claim 11, wherein the one or more first operational wavelength channels are optical wavelength channels for Raman amplification of communication signals transmitted from the second communication node toward the first communication node on the first optical fiber of the optical fiber span.
